Europäisches Patentamt

(19) European Patent Office

Office européen des brevets

(11) Publication number: **0 013 139**
**B1**

(12) **EUROPEAN PATENT SPECIFICATION**

(45) Date of publication of patent specification: 05.01.83

(51) Int. Cl.³: **C 08 L 25/16,**
**C 08 L 23/02, C 08 L 25/10**

(21) Application number: 79302979.4

(22) Date of filing: 20.12.79

(54) Blends of poly(p-methylstyrene) with polyolefins.

(30) Priority: 20.12.78 US 971178
24.08.79 US 69481

(73) Proprietor: MOBIL OIL CORPORATION
150 East 42nd Street
New York New York 10017 (US)

(43) Date of publication of application:
09.07.80 Bulletin 80/14

(72) Inventor: Arbit, Harold Abraham
35 North Sixth Avenue
Highland Park, New Jersey 08904 (US)

(45) Publication of the grant of the patent:
05.01.83 Bulletin 83/1

(74) Representative: Cooper, John Anthony
Mobil Court 3 Clements Inn
London WC2A 2EB (GB)

(84) Designated Contracting States:
BE DE FR GB IT NL

(56) References cited:
DE - B - 1 208 486
GB - A - 1 328 446
US - A - 3 586 740
US - A - 3 753 961
US - A - 3 880 790

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Blends of poly(p-methylstyrene) with polyolefins

This invention relates to blends of poly(p-methylstyrene) with low molecular weight polyolefins, olefin copolymers and styrene-butadiene rubbers which can be crosslinked by ionizing radiation at low dosage levels.

U.S. Patent No. 3,586,740 describes blends of 50 to 99.5% by weight of a monovinyl aromatic hydrocarbon homopolymer or copolymer with up to 30% by weight of an alpha-alkyl styrene, and of 0.5 to 50% by weight of an alfin rubber consisting of a butadiene homopolymer or copolymer with up to 55% by weight of a conjugated aliphatic diene or monovinyl aromatic hydrocarbon, the majority of the alfin rubber being a polymer of molecular weight 50,000 to 1,250,000 and the remainder of the alfin rubber suitably having a molecular weight of over 5,000,000. Molded and extruded products made from such blends are said to possess particularly high impact strengths.

The present invention is based on the observation that blends of poly(p-methylstyrene) with low molecular weight polyolefin, olefin copolymer or styrene-butadiene rubber can be formed into shaped articles which, after being crosslinked by ionizing radiation, are heat-resistant and, more especially, resistant to fatty foods under microwave oven conditions.

Accordingly, the present invention provides a blend of a homopolymer of p-methylstyrene (as herein defined) or a copolymer thereof with from 1 to 10 weight percent of a conjugated diene, and of from 0.1 to 10 weight percent, based on the p-methylstyrene polymer, of a $C_2$—$C_4$ monoolefin homopolymer, monoolefin copolymer or styrene-butadiene rubber having a molecular weight of from 2,000 to 20,000.

The monomer used in preparing the homopolymer or copolymers from which the blends of this invention are based is p-methylstyrene. It is within the contemplation of this invention to use mixtures of methylstyrene rich in p-methylstyrene. Such mixtures contain at least 95 weight percent, preferably 97—99 weight percent, p-methylstyrene and less than 0.1 weight percent o-methylstyrene with the balance being m-methylstyrene, and unless the context suggests otherwise, references herein to p-methylstyrene should be construed accordingly. A typical mixture contains, by weight, 95 percent p-methylstyrene and about 0.5 percent o-methylstyrene with the balance being m-methylstyrene. These mixtures may be obtained by catalytic dehydrogenation of the mixtures of ethylmethyl benzene isomers described in U.S. Patent No. 4,086,287.

The p-methylstyrene polymers contemplated herein are homopolymers of p-methylstyrene or a p-methylstyrene-rich isomer mixture or copolymers thereof containing from 1 to 10 weight percent conjugated diene, such as butadiene and isoprene. The polymerization reaction is carried out by using methods and catalysts well known in the art for polymerizing styrene. The reaction can be carried out in solution, bulk, suspension or emulsion.

In accordance with this invention, the material that is blended with the (p-methylstyrene) polymer is a low molecular weight poly($C_2$—$C_4$) monoolefin, monoolefin copolymer or styrene butadiene rubber, the molecular weight thereof being from 2,000 to 20,000. This material includes homopolymers of ethylene, propylene and butene-1 and copolymers thereof such as ethylene-propylene, butene-propylene or butene-ethylene. Also utilizable are copolymers of monoolefin and an unsaturated monomer copolymerizable therewith such as ethylene-acrylate copolymers, e.g., ethylene acrylic acid and ethylene-ethyl acrylate or ethylene-vinyl acetate. Such polyolefins or olefin copolymers can be prepared by any of the processes well known in the art, usually under free radical conditions. A preferred material is low molecular weight polyethylene, which is described in U.S. Patents, such as Nos. 2,402,137; 2,504,400; and 2,683,141. Low molecular weight polyolefins, particularly polyethylene, are available commercially.

Small amounts of low molecular weight polyolefins, olefin copolymers of styrene butadiene rubber are effective to induce crosslinking by radiation at low dosage level. From 0.1 weight percent to 10 weight percent, preferably from 0.5 weight percent to 5 weight percent based on the p-methylstyrene polymer will be used. Blending can be effected in a variety of ways, such as in solution in aromatic solvents such as toluene from which sheets or films can be cast. Alternatively blend components can be mixed in a tumbling agitator and fed into an extruder to produce sheets, films, or foamed sheets, or they can be fed separately to an extruder for extruder blending.

The blends of this invention can be formed into sheets, films, or foamed sheets and thermoformed to produce shaped articles, such as food containers. After being irradiated, such shaped articles are heat resistant and are not affected by fatty foods under microwave oven conditions.

Ionizing radiation is inclusive of extremely short-wave length, high energetic, penetrating rays such as gamma rays, X-rays, and subatomic particles accelerated in cyclotrons, betatrons, synchrotrons, and linear accelerators. The effect of irradiating the shaped articles is to crosslink the poly (p-methylstyrene) blend. The irradiation dose can be between 20 megarads and 45 megarads, whereas poly(p-methylstyrene) requires between 50 megarads and 60 megarads. Similar blends using polystyrene are not crosslinked at low dosages.

# 0 013 139

### Example 1

Poly(p-methylstyrene) (PPMS), containing 3% meta isomer and 0.1% ortho isomer, was dissolved in toluene at a concentration of 25 weight percent. Then, one weight percent low molecular weight, finely divided polyethylene (particle size 12 microns average) based on solid weight was added and dissolved. The polyethylene had a molecular weight of 5,000—6,000 and density of 0.99 g./cc. Films were cast onto a smooth surface coated with polyethylene terephthalate and drawn down and dried to obtain a dried film thickness of about 2 mils (1 mil = 2.54 x $10^{-3}$ cm). Film samples were irradiated by electron beam at various megarad (M rads (1 Rad = m J/kg)) doses. For each dosage level crosslinking was determined by measuring solubility of the irradiated films in toluene at room temperature overnight. Any soluble gel thus formed was filtered and dried to constant weight at 115°C. For comparison, films of polystyrene (PS) containing one weight percent of the polyethylene used above were irradiated and tested for gel content. Pertinent data are set forth in the following Table I.

### TABLE I

| Dose, M Rads (1 Rad = 10 mJ/kg) | Gel. Content, % | |
|---|---|---|
| | 1% Polyethylene in | |
| | PPMS | PS |
| 0 | 0 | 0 |
| 2 | 0 | 0 |
| 12 | 1.3 | 0 |
| 22 | 58.9 | 0 |
| 42 | 90.4 | 0 |
| 44 | 96.5 | 0 |

From the data in Table I, it will be noted that at doses between 20 and 45 M Rads (1 Rad = 10 mJ/kg) substantial crosslinking of the blend of PPMS and polyethylene took place as measured by gelation, whereas PS blends did not crosslink. With PPMS alone (unblended), doses in the order of 50—60 M Rads (1 Rad = 10 mJ/kg) were required. Thus, using the blends of this invention considerable energy savings are effected.

### Example 2

The run of Example 1 was repeated, except that the polyethylene used was one having a molecular weight of about 18,000 and a density of 0.924 g./cc. Pertinent data for irradiation of 2 mil (1 mil = 2.54 x $10^{-3}$ cm) films of the 1% blend in PPMS are set forth in Table II.

### TABLE II

| Dose, M Rads (1 Rad = 10 mJ/kg) | Gel Content, % | |
|---|---|---|
| | 1% Polyethylene in | |
| | PPMS | PS |
| 0 | 0 | 0 |
| 10—12 | 0 | 0 |
| 40—42 | 93.1 | 0 |

### Examples 3 to 7

A series of blends with PPMS was prepared according to the procedure of Example 1, each containing one weight percent of a different polyolefin or olefin copolymer and films were made therefrom. Each film was irradiated by electron beam at various M Rad (1 Rad = 10 mJ/kg) dosage levels. As described in Example 1, the amount of crosslinking was determined at each dosage level. Pertinent data and results are set forth in Table III.

3

TABLE III

| Example No. | Additive | % Ethylene In Additive | % Gel At Radiation Levels, M Rads (1 Rad = 10 mJ/kg) | | | | |
|---|---|---|---|---|---|---|---|
| | | | 0 | 2 | 12 | 24 | 44 |
| 3 | Ethylene Acrylic Acid, Copolymer | 92 | 0 | .19 | .16 | 9.2 | 42.9 |
| 4 | Ethylene Vinyl Acetate, Copolymer | 92 | 0 | 0 | .05 | 13.1 | 30.1 |
| 5 | Polypropylene | 0 | 0 | 0 | .31 | 25.2 | 47.9 |
| 6 | Styrene Butadiene Rubber* | 0 | 0 | 3.1 | 6.5 | 37.3 | 61.4 |
| 7 | Ethylene Propylene Rubber | $\simeq$ 30 | 0 | 3.3 | 4.2 | 47.3 | 57.9 |

* About 30% styrene

**Claims**

1. A blend of (i) a homopolymer of methylstyrene containing at least 95 weight percent p-methylstyrene, less than 0.1 weight percent o-methylstyrene and a balance of m-methylstyrene or a copolymer thereof with from 1 to 10 weight percent of a conjugated diene, and of (ii) from 0.1 to 10 weight percent based on the methylstyrene polymer, of a $C_2$—$C_4$ monoolefin homopolymer, monoolefin copolymer or styrene-butadiene rubber having a molecular weight of from 2,000 to 20,000.

2. The blend of claim 1, which contains from 0.5 to 5 weight percent of the $C_2$—$C_4$ monoolefin homopolymer, monoolefin copolymer or styrene-butadiene rubber.

3. The blend of claim 1 or claim 2, wherein the $C_2$—$C_4$ monoolefin homopolymer is polyethylene having a molecular weight of from 5,000 to 6,000.

4. The blend of claim 1 or claim 2, wherein the $C_2$—$C_4$ monoolefin homopolymer is polyethylene having a molecular weight of 18,000.

5. The blend of claim 2, which contains from 0.5 to 5 weight percent of styrene-butadiene rubber.

6. The blend of claim 2, wherein the $C_2$—$C_4$ monoolefin homopolymer is polypropylene.

7. The blend of claim 2, wherein the monoolefin copolymer is ethylene-propylene rubber.

**Revendications**

1. Mélange de (1) un homopolymère de méthylstyrène contenant au moins 95% en poids de p-méthylstyrène, moins de 0,1% en poids d'o-méthylstyrène, le reste étant constitué de m-méthylstyrène ou d'un copolymère correspondant avec 1 à 10% en poids d'un diène conjugué et de (2) 0,1 à 10% en poids par rapport au polymère de méthylstyrène, d'un homopolymère de mono-oléfine en $C_2$—$C_4$, d'un copolymère de mono-oléfine ou d'un caoutchouc de styrène-butadiène ayant un poids moléculaire de 2 000 à 20 000.

2. Mélange selon la revendication 1, qui contient 0,5 à 5% en poids de l'homopolymère de mono-oléfine en $C_2$—$C_4$, du copolymère de mono-oléfine ou du caoutchouc de styrène-butadiène.

3. Mélange selon l'une des revendications 1 ou 2, dans lequel l'homopolymère de mono-oléfine en $C_2$—$C_4$ est un polyéthylène ayant un poids moléculaire de 5 000 à 6 000.

4. Mélange selon l'une des revendications 1 ou 2, dans lequel l'homopolymère de mono-oléfine en $C_2$—$C_4$ est un polyéthylène ayant un poids moléculaire de 18 000.

5. Mélange selon la revendication 2, qui contient 0,5 à 5% en poids de caoutchouc de styrène-butadiène.

6. Mélange selon la revendication 2, dans lequel l'homopolymère de mono-oléfine en $C_2$—$C_4$ est le polypropylène.

7. Mélange selon la revendication 2, dans lequel le copolymère de mono-oléfine est un caoutochouc d'éthylène-propylène.

**Patentansprüche**

1. Mischung aus (i) einem Methylstyrolhomopolymeren, das mindestens 95 Gew.-% p-Methylstyrol, weniger als 0,1 Gew.-% o-Methylstyrol und den Rest m-Methylstyrol oder ein Copolymer davon mit 1 bis 10 Gew.-% eines konjugierten Diens enthält, und (ii) 0,1 bis 10 Gew.-%, bezogen auf das Methylstyrolpolymer, eines $C_2$—$C_4$-Monoolefinhomopolymers, Monoolefincopolymers oder Styrol-Butadien-Kautschuks mit einem Molekulargewicht von 2000 bis 20 000.

2. Mischung nach Anspruch 1, gekennzeichnet durch einen Gehalt von 0,5 bis 5 Gew.-% des $C_2$—$C_4$-Monoolefinhomopolymers, Monoolefincopolymers oder Styrol-Butadien-Kautschuks.

3. Mischung nach Anspruch 1 oder Anspruch 2, dadurch gekennzeichnet, daß das $C_2$—$C_4$-Monoolefinhomopolymer Polyäthylen mit einem Molekulargewicht von 5000 bis 6000 ist.

4. Mischung nach Anspruch 1 oder Anspruch 2, dadurch gekennzeichnet, daß das $C_2$—$C_4$-Monoolefinhomopolymer Polyäthylen mit einem Molekulargewicht von 18 000 ist.

5. Mischung nach Anspruch 2, gekennzeichnet durch einen Gehalt von 0,5 bis 5 Gew.-% an Styrol-Butadien-Kautschuk.

6. Mischung nach Anspruch 2, dadurch gekennzeichnet daß das $C_2$—$C_4$-Monoolefinhomopolymer Polypropylen ist.

7. Mischung nach Anspruch 2, dadurch gekennzeichnet, daß das Monoolefincopolymer Äthylen-Propylen-Kautschuk ist.